# FASCICULE DE BREVET EUROPEEN

(11) **EP 2 138 553 B1**
(45) Date de publication et mention de la délivrance du brevet: **08.08.2018**
(21) Numéro de dépôt: 09290439.0
(22) Date de dépôt: 12.06.2009
(51) Int. Cl.: C10G 3/00, C10G 45/02, C10G 45/08, C10G 45/64, C10G 65/04

(54) **Procédé de conversion de charges issues de sources renouvelables en bases carburants gazoles de bonne qualité mettant en oeuvre un catalyseur zéolithique sans séparation gaz liquide intermédiaire**
Konvertierungsverfahren von Belastungen aus erneuerbaren Quellen auf der Basis von Dieselbrennstoffen guter Qualität, bei dem ein Katalysator vom Typ Zeolith ohne Zwischentrennung von Flüssiggas zum Einsatz gebracht wird
Method for converting charges from renewable sources based on high-quality diesel fuels implementing a zeolitic catalyst with no intermediate gas-liquid separation

(30) Priorité: 24.06.2008 FR 0803531
(43) Date de publication de la demande: 30.12.2009
(73) Titulaire: IFP Energies nouvelles, 92500 Rueil-Malmaison (FR)
(72) Inventeur: Bouchy, Christophe, 69007 Lyon (FR); Daudin, Antoine, 69960 Corbas (FR); Guillon, Emmanuelle, 69300 Vernaison (FR); Dupassieux, Nathalie, 69005 Lyon (FR); Chapus, Thierry, 69001 Lyon (FR)

(56) Documents cités:
- EP-A- 1 396 531
- EP-A- 1 741 768
- WO-A-2006/100584
- US-A1- 2004 230 085
- US-A1- 2006 186 020

## Description

### Domaine de l'invention

Dans un contexte international marqué par la croissance rapide en besoin de carburants, en particulier de bases gazoles dans la communauté européenne, la recherche de nouvelles sources d'énergie renouvelables pouvant être intégrées au schéma traditionnel du raffinage et de la production de carburants constitue un enjeu majeur.

A ce titre, l'intégration dans le processus de raffinage de nouveaux produits d'origine végétale, issus de la conversion de la biomasse lignocellulosique ou issus de la production d'huiles végétales ou de graisses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux carburants de type pétroliers dans les pools carburants. En outre, les procédés connus à ce jour utilisant des huiles végétales ou des graisses animales sont à l'origine d'émissions de CO₂, connus pour ces effets négatifs sur l'environnement. Une meilleure utilisation de ces bio ressources, comme par exemple leur intégration dans le pool carburant présenterait donc un avantage certain.

La forte demande en carburants gazoles, couplée avec l'importance des préoccupations liées à l'environnement renforce l'intérêt d'utiliser des charges issues de sources renouvelables. Parmi ces charges on peut citer par exemple les huiles végétales, les graisses animales, brutes ou ayant subi un traitement préalable, ainsi que les mélanges de telles charges. Ces charges contiennent des structures chimiques de type triglycérides ou esters ou acides gras, la structure et la longueur de chaîne hydrocarbonée de ces derniers étant compatible avec les hydrocarbures présents dans les gazoles.

Une approche possible consiste à convertir les charges de type huiles végétales par transestérification. Les triglycérides, qui constituent essentiellement de telles charges, sont alors convertis, en présence d'un alcool et d'un catalyseur, en esters correspondants. Parmi les inconvénients de cette voie on peut citer : a/ l'augmentation des émissions de NOx, en raison de la présence d'oxygène dans les esters ; b/ la température d'ébullition assez élevée, de l'ordre de 360°C, ce qui peut poser problème pour respecter les spécifications de point final.

La demande de brevet n° EP 1, 681,337 A décrit la transformation charges issues de sources renouvelables par décarboxylation, pour produire des distillats moyens. L'avantage de cette voie consiste à limiter la consommation d'hydrogène nécessaire. Le procédé comprend une étape optionnelle de pré-traitement suivie d'une étape d'isomérisation mettant en oeuvre un catalyseur contenant un tamis moléculaire choisi parmis la SAPO-11, la SAPO-41, la ZSM-22, la ferrierite ou la ZSM-23 et un métal du groupe VIII choisi parmi le palladium, le platine et le nickel, ledit procédé opérant à une température comprise entre 200 et 500°C, et à une pression comprise entre 2 et 15 MPa, les catalyseurs utilisés étant des catalyseurs métalliques. Les rendements en bases gazoles obtenus selon ce procédé ne sont cependant pas maximisés.

Le brevet US 4, 992,605 décrit un procédé de production de bases pour le pool gazole produites à partir de la transformation directe d'huiles végétales (colza, palme, soja, tournesol) ou de biomasse lignocellulosique en hydrocarbures saturés après hydrotraitement ou hydroraffinage de ces produits en présence d'un catalyseur a base de cobalt et de molybdène à une température comprise entre 350 et 450°C et à une pression comprise entre environ 4,8 MPa et 15,2 MPa. Ces conditions permettent d'obtenir des produits à haut indice de cétane. Les additifs pro-cétane ainsi obtenus sont mélangés au gazole à des teneurs de 5 à 30% en volume. Cependant, ce procédé présente comme inconvénient majeur une consommation d'hydrogène élevée due aux réactions de méthanisation ou de déplacement du gaz à l'eau ("water-gas shift reaction"). En outre, l'oxygène contenu dans les triglycérides est généralement décomposé par hydrodéoxygénation en présence de catalyseur d'hydrotraitement, ce qui est coûteux en hydrogène.

La demande de brevet EP1 741 768 décrit un procédé comprenant un hydrotraitement suivi d'une étape d'hydroisomérisation afin d'améliorer les propriétés à froid des paraffines linéaires obtenues, une étape de strippage intermédiaire étant de préférence mise en oeuvre. Les catalyseurs utilisés dans l'étape d'hydroisomérisation sont des catalyseurs bifonctionnels et sont constitués d'une phase active métallique comprenant un métal du groupe VIII choisi parmi le palladium, le platine et le nickel, dispersé sur un support acide de type tamis moléculaire choisi parmi la SAPO-11, la SAPO-41, la ZSM-22, la ferrierite ou la ZSM-23, ledit procédé opérant à une température comprise entre 200 et 500°C, et à une pression comprise entre 2 et 15 MPa. Néanmoins, l'utilisation de ce type de solide entraîne une perte de rendement en distillats moyen pour la production de diesel.

Un des avantages de l'invention est fournir un procédé permettant à partir de charges issues de sources renouvelables d'obtenir des rendements élevés en bases gazoles tout en permettant une consommation réduite de la quantité d'hydrogène.

### Objet de l'invention

La présente invention concerne un procédé en continu pour la conversion en bases carburants gazoles, de charges provenant de sources renouvelables.

Les charges de départ sont issues de sources renouvelables, telles que les huiles et graisses d'origine végétale ou animale, ou des mélanges de telles charges, contenant des triglycérides et/ou des acides gras et/ou des esters. Parmi les huiles végétales possibles, elles peuvent être brutes ou raffinées, totalement ou en partie, et issues des végétaux suivants : colza, tournesol, soja, palme, palmiste, olive, noix de coco, jatropha cette liste n'étant pas limitative. Les huiles d'algues ou de poisson sont également pertinentes. Parmi les graisses possibles, on peut citer toutes les graisses animales telles que le lard ou les graisses composés de résidus de l'industrie alimentaire ou issus des industries de la restauration.

Les charges ainsi définies contiennent des structures triglycérides et/ou acides gras, dont les chaînes grasses contiennent un nombre d'atomes de carbone compris entre 8 et 25.

Les hydrocarbures produits lors de la conversion des charges de départ selon l'invention sont caractérisés par :
a/ un nombre d'atomes de carbone égal à celui des chaînes des acides gras de départ, si le mécanisme est un mécanisme d'hydrogénation du groupe carboxylique en groupe alkyl.
b/ une chaîne hydrocarbonée comptant un atome de carbone de moins que les chaînes des acides gras de départ, si le mécanisme mis en jeu est une décarboxylation / décarbonylation.
c/ un degré de ramification des hydrocarbures ajusté de manière à obtenir des propriétés de tenue à froid et un indice de cétane compatibles avec les normes en vigueur pour le gazole.

Il est connu d'après l'état de l'art que les deux voies de transformation a/ et b/ coexistent généralement. Le procédé décrit dans la présente invention vise par conséquent à maximiser le rendement en gazole, et cherche à promouvoir le mécanisme d'hydrogénation décrit en a/. Le choix des catalyseurs et des conditions opératoires visera donc à orienter la sélectivité au bénéfice de l'hydrogénation, tout en cherchant à limiter au strict nécessaire la consommation d'hydrogène, et en particulier celle qui résulterait en l'occurrence de réactions non désirées. Par ailleurs le procédé décrit dans la présente invention vise également à substantiellement isomériser les paraffines de la coupe gazole tout en limitant leur craquage en fraction plus légères non désirées telles que par exemple la coupe naphta.

Les bases gazoles produites sont d'excellente qualité :
▪ elles présentent une faible teneur en soufre, azote et aromatiques.
▪ un excellent cétane, en raison de la structure substantiellement paraffinique des hydrocarbures formés.
▪ des bonnes propriétés de tenue à froid en raison du degré d'isomérisation des paraffines de la coupe;
▪ une basse densité (généralement moins de 800 kg/m³), ce qui est un avantage dans la mesure où cela facilite l'obtention pour le pool gazole de la spécification en la matière qui est d'au maximum 845 kg/m³.

Un objectif de l'invention est de fournir un procédé de traitement d'une charge issue d'une source renouvelable comprenant une étape d'hydrotraitement suivie d'une étape de séparation d'eau et d'une étape d'élimination des composés azotés de la base hydrocarbonée obtenue, avant hydroisomérisation de ladite base hydrocarbonée, c'est à dire un enchaînement hydrotraitement / hydroisomérisation sans étape de séparation gaz liquide intermédiaire.
Un autre objectif de l'invention est de permettre par la mise en oeuvre, entre une étape d'hydrotraitement et d'hydroisomérisation, successivement, une étape d'élimination d'eau et une étape d'élimination des composés azotés, sans étape de séparation gaz-liquide intermédiaire, le traitement de l'effluent hydrotraité non débarrassé des impuretés soufrées telles que l'H2S.
Un objectif supplémentaire de l'invention est d'effectuer l'étape d'hydroisomérisation en présence de composés soufrés non éliminés à l'issu de l'étape d'hydrotraitement en présence d'un catalyseur thiorésistant particulier.

Un avantage de l'invention est donc de mettre en oeuvre une combinaison d'une étape a) d'hydrotraitement opérant dans des conditions opératoires précises permettant une consommation réduite en hydrogène et d'une étape d'hydroisomérisation mettant en oeuvre un catalyseur d'hydroisomérisation particulier, sans séparation gaz-liquide intermédiaire, permettant à la fois le traitement d'un effluent hydrotraité contenant des impureté soufrées et l'obtention de rendement élevé en base gazole ainsi qu'une consommation réduite en H2.

### Résumé de l'invention.

L'invention porte sur un procédé de traitement d'une charge issue d'une source renouvelable selon la revendication 1 comprenant les étapes suivantes :
a) hydrotraitement en présence d'un catalyseur en lit fixe, ledit catalyseur comprenant une fonction hydro-déshydrogénante et un support amorphe, à une température comprise entre 200 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 150 et 750 Nm³ d'hydrogène/m³ de charge,
b) Séparation à partir de l'effluent issu de l'étape a) d'au moins une partie de l'eau, et d'au moins une base hydrocarbonée,
c) élimination des composés azotés à partir de ladite base hydrocarbonée issue de l'étape b),
d) hydroisomérisation d'au moins une partie de ladite base hydrocarbonée issue de l'étape c) en présence d'un catalyseur sélectif d'hydroisomérisation en lit fixe, ledit catalyseur comprenant au moins un métal du groupe VIII et/ou du groupe VI B et au moins un tamis moléculaire zéolithique 10 MR monodimensionnel choisi parmi les tamis moléculaires zéolithiques ZSM-48 et ZBM-30, pris seul ou en mélange, ladite étape c) étant effectuée à une température comprise entre 150 et 500°C, à une pression comprise entre 1 MPa et 10 MPa, à une vitesse spatiale horaire comprise entre 0,1 et 10 h-1 et en présence d'une quantité totale d'hydrogène mélangée à la charge telle que le ratio hydrogène/charge soit compris entre 70 et 1000 Nm3/m3 de charge,
e) séparation, à partir de l'effluent issu de l'étape d) de l'hydrogène, des gaz et d'au moins une base gazole.

### Description de l'invention

La présente invention est particulièrement dédiée à la préparation de bases carburant gazoles correspondant aux nouvelles normes environnementales, à partir de charges issues de sources renouvelables.
Ces charges sont constituées par l'ensemble des huiles végétales et des graisses animales, contenant essentiellement des triglycérides et des acides gras ou des esters, avec des chaînes grasses hydrocarbonées ayant un nombre d'atomes de carbone compris entre 6 et 25. Ces huiles peuvent être les huiles de palme, de palmiste, de coprah, de ricin et de coton, les huiles d'arachides, de lin, de crambe, de jatropha, toutes les huiles issues par exemple du tournesol ou du colza par modification génétique ou hybridation ainsi que les huiles d'algues. Les huiles de fritures, les huiles animales variées comme les huiles de poisson, le suif, le saindoux peuvent être utilisées.
Les densités à 15°C de ces huiles sont comprises entre 850 et 970 kg/m³ et leurs viscosités cinématiques à 40°C sont comprises entre 20 et 400 mm²/s , plus généralement entre 30 et 50 mm²/s.
Ces charges sont exemptes ou ont des teneurs en soufre, en azote et en aromatiques faibles : teneurs en soufre et en azote typiquement inférieures à 500 ppm, et teneurs en aromatiques inférieures à 5% poids.

De manière avantageuse, la charge peut subir préalablement à l'étape a) du procédé selon l'invention une étape de pré-traitement ou pré-raffinage de façon à éliminer, par un traitement approprié, des contaminants tels que des métaux, comme les composés alcalins par exemple sur des résines échangeuses d'ions, les alcalino-terreux et le phosphore. Des traitements appropriés peuvent par exemple être des traitements thermiques et/ou chimiques bien connus de l'homme du métier.

De manière préférée, le prétraitement optionnel consiste en une pre-hydrogénation douce de ladite charge de façon à éviter les réactions secondaires des doubles liaisons. La pré-hydrogénation douce opère avantageusement à une température comprise entre 50 et 400 °C et à une pression d'hydrogène comprise entre 0,1 et 10 MPa et de manière préférée, à une température comprise entre 150 et 200 °C. Le catalyseur de pré-hydrogénation comprend avantageusement des métaux du groupe VIII et/ou VIB et de manière préférée, le catalyseur de pré-hydrogénation est un catalyseur à base palladium, de platine de nickel, de nickel et de molybdène ou à base de cobalt et de molybdène, supporté par un support alumine et/ou silice.
Les métaux des catalyseurs utilisés dans l'étape de prétraitement optionnel du procédé selon l'invention sont des métaux sulfurés ou des phases métalliques et de préférence des phases métalliques.

### Étape a) : Hydrotraitement de la charge issue d'une source renouvelable.

Dans l'étape a) du procédé selon l'invention, la charge, éventuellement prétraitée, est mise au contact d'un catalyseur hétérogène à une température comprise entre 200 et 450°C, préférentiellement entre 220 et 350°C, de manière préférée entre 220 et 320°C, et de manière encore plus préférée entre 220 et 310°C. La pression est comprise entre 1 MPa et 10 MPa, de manière préférée entre 1 MPa et 6 MPa et de manière encore plus préférée entre 1 MPa et 4 MPa. La vitesse spatiale horaire est comprise entre 0,1 h⁻¹ et 10 h⁻¹. La charge est mise au contact du catalyseur en présence d'hydrogène. La quantité totale d'hydrogène mélangée à la charge est telle que le ratio hydrogène/charge est compris entre 150 et 750 Nm³ d'hydrogène/m³ de charge, de manière préféré compris entre 150 et 700 Nm³ d'hydrogène/m³ de charge, de manière plus préféré compris entre 150 et 650 Nm³ d'hydrogène/m³ de charge et de manière encore plus préférée, entre 150 et 600 Nm³ d'hydrogène/m³ de charge, cela correspond donc à une quantité d'hydrogène ajoutée à la charge présente d'au moins généralement 0,5% poids d'hydrogène par rapport à la charge. La quantité d'hydrogène effectivement utilisée correspond au moins à la quantité stoechiométrique nécessaire à l'hydrogénation complète de la charge en paraffine. Celle-ci sera donc dépendante de la nature de la charge.

Dans l'étape a) du procédé selon l'invention, on utilise au moins un lit fixe de catalyseur d'hydrotraitement comprenant une fonction hydro-déshydrogénante et un support. On utilisera de préférence un catalyseur dont le support est par exemple choisi dans le groupe formé par l'alumine, la silice, les silices-alumines, la magnésie, les argiles et les mélanges d'au moins deux de ces minéraux. Ce support peut également renfermer d'autres composés et par exemple des oxydes choisis dans le groupe formé par l'oxyde de bore, la zircone, l'oxyde de titane, l'anhydride phosphorique. On utilise de manière préférée un support d'alumine et de manière très préférée d'alumine η, δ ou γ.

Ladite fonction hydrogénante du catalyseur utilisé dans l'étape a) du procédé selon l'invention est avantageusement assurée par au moins un métal du groupe VIII et/ou du groupe VI B.
Ledit catalyseur peut avantageusement être un catalyseur comprenant des métaux du groupe VIII tels que par exemple du nickel et/ou du cobalt le plus souvent en association avec au moins un métal du groupe VIB par exemple du molybdène et/ou du tungstène. On peut par exemple employer un catalyseur comprenant de 0,5 à 10 % en poids d'oxyde de nickel (NiO) et de préférence de 1 à 5 % en poids d'oxyde de nickel et de 1 à 30 % en poids d'oxyde de molybdène (MoO₃), de préférence de 5 à 25 % en poids d'oxyde de molybdène sur un support minéral amorphe, les pourcentages étant exprimés en % poids par rapport à la masse totale du catalyseur.

La teneur totale en oxydes de métaux des groupes VIB et VIII dans le catalyseur utilisé dans l'étape a) est avantageusement comprise entre 5 et 40 % en poids et de manière préférée comprise entre 6 et 30 % en poids par rapport à la masse totale du catalyseur.
Le rapport pondéral exprimé en oxyde métallique entre métal (ou métaux) du groupe VIB sur métal (ou métaux) du groupe VIII est avantageusement compris entre 20 et 1 et de manière préférée entre 10 et 2.

Ledit catalyseur utilisé dans l'étape a) du procédé selon l'invention doit être avantageusement caractérisé par un fort pouvoir hydrogénant de façon à orienter le plus possible la sélectivité de la réaction vers une hydrogénation conservant le nombre d'atomes de carbone des chaînes grasses, ceci afin de maximiser le rendement en hydrocarbures entrant dans le domaine de distillation des gazoles. C'est pourquoi de manière préférée, on opère à une température relativement basse. Maximiser la fonction hydrogénante permet également de limiter les réactions de polymérisation et/ou de condensation conduisant à la formation de coke qui dégraderait la stabilité des performances catalytiques. De façon préférée on utilise un catalyseur de type Ni ou NiMo.

Ledit catalyseur utilisé dans l'étape a) d'hydrotraitement du procédé selon l'invention peut également avantageusement contenir un élément tel que du phosphore et/ou du bore. Cet élément peut être introduit dans la matrice ou de préférence être déposé sur le support. On peut également déposer du silicium sur le support, seul ou avec le phosphore et/ou le bore et/ou le fluor.

La teneur en poids d'oxyde dudit élément est habituellement avantageusement inférieure à 20 % et de manière préférée inférieure à 10 % et elle est habituellement avantageusement d'au moins 0,001 %.

Les métaux des catalyseurs utilisés dans l'étape a) d'hydrotraitement du procédé selon l'invention sont des métaux sulfurés ou des phases métalliques.
Un catalyseur métallique préféré utilisé dans l'étape a) d'hydrotraitement du procédé selon l'invention comporte une teneur en nickel comprise entre 20% et 80% poids et de manière préférée comprise entre 55% et 65% poids. Le support dudit catalyseur est avantageusement choisi dans le groupe formé par l'alumine, l'oxyde de magnésium et la silice et de manière préférée le support est composé d'alumine.

On ne sortirait pas du cadre de la présente invention en utilisant dans l'étape a) du procédé selon l'invention, de manière simultanée ou de manière successive, avec un seul catalyseur ou plusieurs catalyseurs différents. Cette étape peut être effectuée industriellement dans un ou plusieurs réacteurs avec un ou plusieurs lits catalytiques et de préférence à courant descendant de liquide.

L'exothermie des réactions lors de l'hydrotraitement est limitée par toutes méthodes connues de l'homme de l'art : recyclage des produits liquides, trempe par l'hydrogène de recycle etc....

### Étape b) : Séparation d'au moins une partie de l'eau à partir de l'effluent hydrotraité issu de l'étape a).

Conformément à l'étape b) du procédé selon l'invention, l'effluent hydrotraité est soumis à une séparation d'au moins une partie et de préférence la totalité de l'eau, d'au moins une base hydrocarbonée, l'eau étant produite lors de l'étape a) d'hydrotraitement.

Le but de cette étape est de séparer l'eau de l'effluent hydrocarboné, On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape c) du procédé selon l'invention. L'élimination de l'eau peut être réalisée par toutes les méthodes et techniques connues de l'homme du métier, telles que par exemple par séchage, passage sur un dessicant, flash, décantation.

### Étape c) : purification de l'effluent issu de b)

Conformément à l'étape b) du procédé selon l'invention, ladite base hydrocarbonée issue de l'étape b) subit une étape d'élimination des composés azotés qu'elle contient.
La base hydrocarbonée issue de l'étape b) contient généralement des composés organiques azotés résiduels non éliminés lors de l'étape a) d'hydrotraitement du procédé selon l'invention. On a constaté que lesdits composés organiques azotés résiduels sont des inhibiteurs des catalyseurs d'hydroisomérisation, ils doivent donc être éliminés de ladite base hydrocarbonée avant son passage dans l'étape d) d'hydroisomérisation du procédé selon l'invention. L'élimination des composés organiques azotés résiduels peut être réalisée par toutes les techniques connues de l'homme de métier, telles que par exemple l'utilisation de masses de captation. Nous entendons par masse de captation les alumines activées ou non, les silices-alumines, les zéolithes, les charbons actifs, et les résines échangeuses d'ions. De préférence, l'étape c) du procédé selon l'invention est mise en oeuvre sur une résine échangeuse d'ions.

Les effluents provenant de l'étape c) sont exempts d'azote et contiennent des composés soufrés tel que l'H2S. Le soufre peut provenir d'une part de la charge issue de sources renouvelable utilisée à l'étape a) mais également d'un composé soufré volontairement ajouté à l'étape a) du procédé afin de maintenir le catalyseur à l'état sulfuré.
Ainsi, un avantage de l'invention est donc de mettre en oeuvre une combinaison d'une étape a) d'hydrotraitement opérant dans des conditions opératoires précises permettant une consommation réduite en hydrogène et d'une étape d'hydroisomérisation mettant en oeuvre un catalyseur d'hydroisomérisation particulier, sans séparation gaz-liquide intermédiaire, permettant à la fois le traitement d'un effluent hydrotraité contenant des impureté soufrées et l'obtention de rendement élevé en base gazole ainsi qu'une consommation réduite en H2. La présence de composés soufrés impose l'utilisation d'un catalyseur d'hydroisomérisation thiorésistant c'est-à-dire tolérant la présence de composés soufrés sans pour autant dégrader le rendement en carburant produit notamment en base gazole et les qualités de cette base.

### Étape d) : Hydroisomérisation de l'effluent hydrotraité issu de l'étape c).

Une partie au moins de la base hydrocarbonée liquide obtenue à l'issu de l'étape c) est hydroisomérisée en présence d'un catalyseur d'hydroisomérisation sélective. Les catalyseurs d'hydroisomérisation utilisés dans l'étape d) du procédé selon l'invention sont avantageusement de type bifonctionnels, c'est-à-dire qu'ils possèdent une fonction hydro/déshydrogénante et une fonction hydroisomérisante.

Conformément à l'étape d) du procédé selon l'invention, le catalyseur d'hydroisomérisation comprend au moins un métal du groupe VIII et/ou au moins un métal du groupe VIB en tant que fonction hydrodéshydrogénante et au moins un tamis moléculaire en tant que fonction hydroisomérisante.

Selon l'invention, le catalyseur d'hydroisomérisation comprend soit au moins un métal noble du groupe VIII de préférence choisi parmi le platine ou le palladium, actifs sous leur forme réduite, soit au moins un métal du groupe VIB, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

Dans le cas où le catalyseur d'hydroisomérisation comprend au moins un métal noble du groupe VIII, la teneur totale en métal noble du catalyseur d'hydroisomérisation utilisé dans l'étape d) du procédé selon l'invention, est avantageusement comprise entre 0,01 et 5% en poids par rapport au catalyseur fini, de manière préférée entre 0,1 et 4% en poids et de manière très préférée entre 0,2 et 2% en poids.
De préférence, le catalyseur d'hydroisomérisation comprend deux métaux nobles du groupe VIII et de manière très préférée, le catalyseur d'hydroisomérisation comprend le platine et le palladium.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation utilisé dans l'étape c) du procédé selon l'invention, est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Conformément à l'étape d) d'hydroisomérisation du procédé selon l'invention, le catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Oison and Ch. Baerlocher, 5th revised edition, 2001, Elsevier auquel se réfère également la présente demande. Les zéolithes y sont classées selon la taille de leurs ouvertures de pores ou canaux.

Les tamis moléculaires zéolithiques 10 MR monodimensionnel présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui une fois calcinée conduisent à la forme acide desdites zéolithes.
Ledit tamis moléculaire zéolithique 10 MR monodimensionnel dudit catalyseur d'hydroisomérisation est choisi parmi les tamis moléculaires zéolithiques ZSM-48 et ZBM-30, pris seul ou en mélange.
De manière très préférée, ledit tamis moléculaire zéolithique 10 MR monodimensionnel est la ZBM-30 et de manière encore plus préférée, ledit tamis moléculaire zéolithique 10 MR monodimensionnel est la ZBM-30 synthétisée avec le structurant organique triéthylènetétramine.

La zéolithe ZBM-30 est décrite dans le brevet EP-A-46504. La teneur en tamis moléculaire zéolithique 10 MR monodimensionnel est avantageusement comprise entre 5 et 95% poids, de préférence entre 10 et 90% poids, de manière plus préférée entre 15 et 85% poids et de manière très préférée entre 20 et 80% poids par rapport au catalyseur fini.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.
De préférence, la mise en forme est réalisée avec un liant constitué d'une matrice contenant de l'alumine, sous toutes ses formes connues de l'homme du métier, et de manière très préférée avec une matrice contenant de l'alumine gamma.

Les catalyseurs d'hydroisomérisation obtenus sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. D'autres techniques que l'extrusion, telles que le pastillage ou la dragéification, peuvent avantageusement être utilisées.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1°C/min puis un palier de deux heures à 450°C ; durant toute cette étape de réduction, le débit d'hydrogène est de 1000 normaux m³ hydrogène / m³ catalyseur et la pression totale maintenue constante à 1 bar. Toute méthode de réduction ex-situ peut avantageusement être envisagée.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1°C/min puis un palier de deux heures à 450°C ; durant toute cette étape de réduction, le débit d'hydrogène est de 1000 normaux m³ hydrogène / m³ catalyseur et la pression totale maintenue constante à 1 bar. Toute méthode de réduction ex-situ peut avantageusement être envisagée.

Conformément à l'étape d) du procédé selon l'invention, dans la zone d'hydroisomérisation, la charge est mise en contact, en présence d'hydrogène avec ledit catalyseur d'hydroisomérisation, à des températures et des pressions opératoires permettant avantageusement de réaliser une hydroisomérisation de la charge non convertissante. Cela signifie que l'hydroisomérisation s'effectue avec une conversion de la fraction 150°C⁺ en fraction 150°C⁻ inférieure à 20% en poids, de manière préférée inférieure à 10% en poids et de manière très préférée inférieure à 5% en poids.

Ainsi, l'étape d) d'hydroisomérisation du procédé selon l'invention opère à une température comprise entre 150 et 500°C, de préférence entre 150°C et 450°C, et de manière très préférée, entre 200 et 450°C, à une pression comprise entre 1 MPa et 10 MPa, de préférence entre 2 MPa et 10 MPa et de manière très préférée, entre 1 MPa et 9 MPa, à une vitesse volumique horaire avantageusement comprise entre 0,1 h⁻¹ et 10 h⁻¹, de préférence entre 0,2 et 7 h⁻¹ et de manière très préférée, entre 0,5 et 5 h⁻¹, à un débit d'hydrogène tel que le rapport volumique hydrogène/hydrocarbures est avantageusement compris entre 70 et 1000 Nm³/m³ de charge, entre 100 et 1000 normaux m³ d'hydrogène par m³ de charge et de manière préférée entre 150 et 1000 normaux m³ d'hydrogène par m³ de charge.

De manière préférée, l'étape d'hydroisomérisation éventuelle opère à co-courant.

### Étape e) séparation, à partir de l'effluent issu de l'étape d) de l'hydrogène, des gaz et d'au moins une base gazole.

Conformément au procédé selon l'invention, dans l'étape d) du procédé selon l'invention, l'effluent hydroisomérisé es soumis au moins en partie, et de préférence en totalité, à une ou plusieurs séparations. Le but de cette étape est de séparer les gaz du liquide, et notamment, de récupérer les gaz riches en hydrogène pouvant contenir également des légers tels que la coupe C₁ - C₄ et au moins une coupe gazole et une coupe naphta. La valorisation de la coupe naphta n'est pas l'objet de la présente invention, mais cette coupe peut avantageusement être envoyée dans une unité de vapocraquage ou de reformage catalytique.

### Traitement et recyclage des gaz

Le gaz contenant l'hydrogène qui a été séparé à l'étape e) est, si nécessaire, au moins en partie traité pour réduire sa teneur en légers (C₁ à C₄).

La possibilité existe d'additionner au gaz de recyclage l'étape e) une certaine quantité de composé soufré (telle que le DMDS, di-méthyl disulfure), qui par décomposition thermique produit de l'hydrogène sulfuré H₂S. Ce dispositif permet de maintenir si nécessaire le catalyseur d'hydrotraitement et/ou le catalyseur d'hydroisomérisation à l'état sulfuré. De façon avantageuse, la quantité de composé soufré introduite est telle que la teneur en H₂S dans le gaz de recycle est au moins de 15 ppm vol, de préférence d'au moins 0,1 % vol, voire d'au au moins 0.2 % vol.

On peut avantageusement introduire l'hydrogène de recycle avec la charge entrant dans l'étape a) et/ou dans l'étape d) et/ou sous forme d'hydrogène de trempe entre les lits de catalyseurs d'hydrotraitement et/ou d'hydroisomérisation.

### Produits obtenus.

Le produit fourni selon ce procédé est doté d'excellentes caractéristiques, qui en font une base gazole d'excellente qualité :
▪ sa teneur en soufre est inférieure à 10 ppm poids.
▪ sa teneur en aromatiques totaux est inférieure à 5% poids, et la teneur en polyaromatiques inférieure à 2% poids.
▪ l'indice de cétane est excellent, supérieur à 55.
▪ la densité est inférieure à 840 kg/m³, et le plus souvent inférieure à 820 kg/m³.
▪ Sa viscosité cinématique à 40°C est 2 à 8 mm²/s.
▪ ses propriétés de tenue à froid sont compatibles avec les normes en vigueur, avec une température limite de filtrabilité inférieure à -15°C et un point de trouble inférieur à -5°C.

L'invention concerne également une installation utilisable pour mettre en oeuvre le procédé selon l'invention.

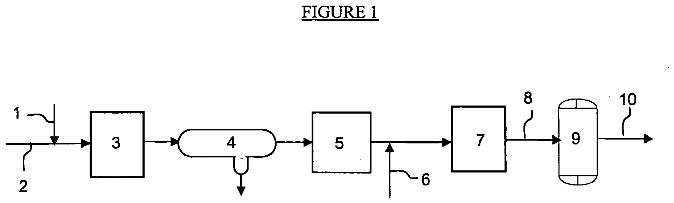

D'après la figure 1, la charge issue de sources renouvelables est admise via la ligne (1) dans la zone d'hydrotraitement (3) opérant en présence d'hydrogène, l'hydrogène étant amené par la tubulure (2). Dans la zone d'hydrotraitement (3), la charge est mise en contact avec un catalyseur d'hydrotraitement décrit ci-dessus. L'effluent hydrotraité est ensuite introduit dans une zone (4) de décantation de manière à séparer l'eau des composés hydrocarbonés. La fraction hydrocarbonée est récupérée et envoyée dans une étape de purification (5) permettant d'éliminer les composés organiques azotés. Les effluents ainsi purifié sont envoyé à une étape d'hydroisomérisation (7) mettant en oeuvre le catalyseur sélectif d'hydroisomérisation de type zéolithique par la conduite (5). Selon la fig.1 la fraction base gazole liquide est introduite, ainsi un flux d'hydrogène par la conduite (6), dans la zone d'hydroisomérisation (7) contenant le catalyseur sélectif d'hydroisomérisation décrit ci-dessus. L'effluent ainsi hydroisomérisé est ensuite envoyé via la tubulure (8) dans la zone (9) de séparation de manière à séparer les gaz d'au moins une coupe gazole récupérée via la conduite (10) et valorisable dans le pool gazole.

### Exemple 1

Une huile de colza pré-raffinée est traitée selon le procédé conforme à l'invention.

### Étape a) : hydrotraitement

Dans un réacteur régulé en température de manière à assurer un fonctionnement isotherme et à lit fixe chargé de 190 ml de catalyseur d'hydrotraitement à base de nickel et de molybdène, présentant une teneur en oxyde de nickel égale à 3 % poids, et une teneur en oxyde de molybdène égale à 16 % poids et une teneur en P₂O₅ égale à 6%, le catalyseur étant préalablement sulfuré, on introduit 170g/h huile de colza pré-raffinée de densité 920 kg/m³ présentant une teneur en soufre inférieur à 10 ppm pds, d'indice de cétane de 35 et dont la composition est détaillée ci dessous :

| Glycérides d'acide gras | nature de chaîne grasse | % en masse |
|---|---|---|
| Palmitique | C16:0 | 4 |
| Palmitoléique | C16:1 | <0.5 |
| Stéarique | C18:0 | 2 |
| Oléique | C18:1 | 61 |
| Linoléique | C18:2 | 20 |
| Linoléique | C18:3 | 9 |
| Arachidique | C20:0 | <0.5 |
| Gadoléique | C20:1 | 1 |
| Béhénique | C22:0 | <0.5 |
| Erucique | C22:1 | <1 |

700 Nm³ d'hydrogène/m³ de charge sont introduits dans le réacteur maintenu à une température de 300°C et à une pression de 5 MPa.

### Étape b) : séparation d'eau de l'effluent issu de l'étape a).

La totalité de l'effluent hydrotraité issu de l'étape a) subit une étape de décantation afin d'éliminer l'eau produite lors de l'étape d'hydrotraitement.

### Étape c): purification de l'effluent issu de b) sur une masse de captation

La totalité de l'effluent hydrotraité et décanté issu de l'étape b) est envoyée dans un réacteur lit fixe contenant une résine échange d'ion Amberlyst 35Dry de la société Amberlyst dans les conditions opératoires suivantes:
- débit de charge : 150 g/h
- masse d'Amberlyst 35Dry: 100 g
- pression de travail: 50 bar
- température: 100°C

### Étape d) : Hydroisomérisation de l'effluent hydrotraité issu de l'étape c) sur un catalyseur selon l'invention

### 1/ préparation du catalyseur d'hydroisomérisation C1

Le catalyseur d'hydroisomérisation est un catalyseur contenant un métal noble et une zéolithe 10 MR monodimensionnelle ZBM-30. Ce catalyseur est obtenu selon le mode opératoire décrit ci-après. La zéolithe ZBM-30 est synthétisée selon le brevet BASF EP-A-46504 avec le structurant organique triéthylènetétramine. La zéolithe ZBM-30 brute de synthèse est soumise à une calcination à 550 °C sous flux d'air sec durant 12 heures. La zéolithe H-ZBM-30 (forme acide) ainsi obtenue possède un rapport Si/Al de 45. La zéolithe est malaxée avec un gel d'alumine de type SB3 fourni par la société Condéa-Sasol. La pâte malaxée est alors extrudée au travers d'une filière de diamètre 1.4 mm. Les extrudés ainsi obtenus sont calcinés à 500 °C durant 2 heures sous air. La teneur pondérale H-ZBM-30 est de 20 % poids. Ensuite, les extrudés de support sont soumis à une étape d'imprégnation à sec par une solution aqueuse de Pt(NH₃)₄Cl₂ et Pd(NH₃)₄Cl₂, laissés à maturer en maturateur à eau durant 24 heures à température ambiante puis calcinés durant deux heures sous air sec en lit traversé à 500°C (rampe de montée en température de 5°C/min). Les teneurs pondérales en platine et en palladium du catalyseur fini après calcination sont respectivement de 0.80% et 0.29%.

### 2/ hydroisomérisation de l'effluent hydrotraité issu de l'étape c.

L'effluent est hydroisomérisé à hydrogène perdu sur le catalyseur C1 dans un réacteur d'hydroisomérisation. dans les conditions opératoires ci-dessous:
- PPH (masse de charge / masse de catalyseur / heure) = 1,5 h⁻¹
- pression totale de travail: 50 bar
- rapport hydrogène / charge: 1000 normaux litres / litre
La température est ajustée de manière à avoir une conversion de la fraction 150°C⁺ en fraction 150°C⁻ inférieure à 10% en poids lors de l'hydroisomérisation. Avant test, le catalyseur subit une étape de réduction dans les conditions opératoires suivantes:
- débit d'hydrogène: 1600 normaux litres par heure et par litre de catalyseur
- montée de température ambiante 120°C: 10 °C/min
- palier d'une heure à 120°C
- montée de 120°C à 450°C à 5°C/min
- palier de deux heures à 450°C
- pression : 1 bar

L'effluent hydroisomérisé est ensuite caractérisé. Les rendements et les propriétés carburant sont reportés dans le tableau 1.

**Tableau 1**

| Caractéristiques du produit | |
|---|---|
| (T = 350°C, P = 50 bar, H₂/HC = 1000NL/L) | |
| Coupe 150°C⁻ | 8 % poids |
| Coupe 150 °C⁺ (Diesel) | 92 % poids |
| *Indice de cétane (ASTMD613)* | 62 |
| *Température limite de filtrabilité (°C)* | -31 |

Le procédé selon l'invention permet donc l'obtention de base gazole avec un bon rendement et d'excellente qualité correspondant aux spécifications en vigueur.

### Exemple comparatif

Une charge identique à celle de l'exemple 1 est mise en oeuvre dans un procédé comportant une étape d'hydrotraitement a) opérant dans les mêmes conditions opératoires et sur le même catalyseur que dans l'étape a) de l'exemple 1. Les mêmes étapes de séparation b) de l'eau et c) d'élimination des composés azotés que dans l'exemple 1 et dans les mêmes conditions sont mises en oeuvre de manière à récupérer une base hydrocarbonée liquide qui va subir une étape d) d'hydroisomérisation opérant dans les mêmes conditions opératoires que l'étape c) de l'exemple 1 mais sur un catalyseur d'hydroisomérisation différent.

Le catalyseur d'hydroisomérisation est un catalyseur contenant un métal noble et une zéolithe 10 MR monodimensionnelle ZSM 22. Ce catalyseur est obtenu selon le mode opératoire décrit ci-après. La zéolithe ZSM 22 est synthétisée selon la méthode présentée par Ernst et coll. (Applied Catalysis, 1989, 48, 137): 72 grammes de sol de silice (Ludox AS40, DuPont) sont dilués dans 124 ml d'eau; une autre solution contenant 3.54 grammes de Al₂(SO₄)₃, 18 H₂O, 7.75 grammes de KOH et 16.7 grammes de diaminohexane dans 177 ml d'eau est ajoutée à la première solution et agitée. Le gel obtenu est ensuite placé dans des autoclaves en acier inoxydable à 50°C. Après deux jours de synthèse, les autoclaves sont ouverte et la zéolithe synthétisée est lavée à l'eau et filtrée. Le rapport atomique Si/AI de la structure cristallisée est de 30. Le solide est ensuite traité thermiquement sous flux d'azote (10 ml N₂ / minute / gramme de solide) pendant 5 heures à 400°C puis pendant 16 heures à 550°C sous flux d'oxygène (10 ml O₂ / minute / gramme de solide). Afin d'échanger les cations alcalins avec les ions ammonium, le solide est ensuite mise sous reflux durant 4 heures dans une solution aqueuse de chlorure d'ammonium (100 ml de solution / gramme de solide; concentration en chlorure d'ammonium de 0.5 M). L'échantillon est enfin lavé à l'eau distillée pour éliminer le chlorure alcalin (test au nitrate d'argent négatif) puis il est séché une nuit en étuve à 60°C. La zéolithe est ensuite malaxée avec un gel d'alumine de type SB3 fourni par la société Condéa-Sasol. La pâte malaxée est alors extrudée au travers d'une filière de diamètre 1.4 mm. Les extrudés ainsi obtenus sont calcinés à 500°C durant 2 heures sous air. La teneur en H-ZSM 22 est de 14% en poids. Les extrudés de support sont soumis à une étape d'imprégnation à sec par une solution aqueuse de Pt(NH₃)₄Cl₂ et Pd(NH₃)₄Cl₂, laissés à maturer en maturateur à eau durant 24 heures à température ambiante puis calcinés durant deux heures sous air sec en lit traversé à 500°C (rampe de montée en température de 5°C/min). Les teneurs pondérales en platine et en palladium du catalyseur fini après calcination sont respectivement de 0.58% et 0.21%.

L'étape de réduction du catalyseur est la même que celle du catalyseur d'hydroisomérisation C1, de même que les conditions opératoires du test d"hydroisomérisation. La température est ajustée de manière à avoir des qualités de produit comparables à celles obtenus avec le catalyseur C1.
L'effluent hydroisomérisé est ensuite caractérisé. Les rendements et les propriétés carburant sont reportés dans le tableau 3.

**Tableau 3**

| *Caractéristiques du produit* | |
|---|---|
| Coupe 150°C⁻(%pds) | 12 |
| Coupe 150 °C⁺ (Diesel, %pds)) | 88 |
| *Qualité produit de la coupe 150* °*C*⁺ | |
| Indice de cétane (ASTMD613) | 63 |
| Température limite de filtrabilité (°C) | -28 |
| teneur en soufre (ppm pds) | < 10 |

Par rapport au catalyseur d'hydroisomérisation C1, on constate que l'utilisation du catalyseur d'hydroisomérisation à base de ZSM 22 conduit à une perte en produits légers plus importante pour des qualités de produit comparables.

## Revendications

1. Procédé de traitement d'une charge issue d'une source renouvelable comprenant les étapes suivantes :
a) hydrotraitement en présence d'un catalyseur en lit fixe, ledit catalyseur comprenant une fonction hydro-déshydrogénante et un support amorphe, à une température comprise entre 200 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 150 et 750 Nm³ d'hydrogène/m³ de charge,
b) Séparation à partir de l'effluent issu de l'étape a) d'au moins une partie de l'eau et d'au moins une base hydrocarbonée,
c) élimination des composés azotés à partir de ladite base hydrocarbonée issue de l'étape b),
d) hydroisomérisation d'au moins une partie de ladite base hydrocarbonée issue de l'étape c) en présence d'un catalyseur sélectif d'hydroisomérisation en lit fixe, ledit catalyseur comprenant au moins un métal du groupe VIII et/ou du groupe VI B et au moins un tamis moléculaire zéolithique 10 MR monodimensionnel choisi parmi les tamis moléculaires zéolithiques ZSM-48 et ZBM-30, pris seul ou en mélange, ladite étape c) étant effectuée à une température comprise entre 150 et 500°C, à une pression comprise entre 1 MPa et 10 MPa, à une vitesse spatiale horaire comprise entre 0,1 et 10 h-1 et en présence d'une quantité totale d'hydrogène mélangée à la charge telle que le ratio hydrogène/charge soit compris entre 70 et 1000 Nm3/m3 de charge,
e) séparation, à partir de l'effluent issu de l'étape d) de l'hydrogène, des gaz et d'au moins une base gazole.

2. Procédé selon la revendication 1 dans lequel l'étape a) opère en présence d'une quantité totale d'hydrogène mélangée à la charge telle que le ratio hydrogène/charge soit compris entre 150 et 650 Nm³ d'hydrogène/m³ de charge.

3. Procédé selon la revendication 2 dans lequel l'étape a) opère en présence d'une quantité totale d'hydrogène mélangée à la charge telle que le ratio hydrogène/charge soit compris entre 150 et 600 Nm³ d'hydrogène/m³ de charge.

4. Procédé selon l'une des revendications 1 à 3 dans lequel l'étape c) est mise en oeuvre sur une résine échangeuse d'ions.

5. Procédé selon l'une des revendications 1 à 4 dans lequel ledit tamis moléculaire zéolithique 10 MR monodimensionnel est la ZBM-30.

6. Procédé selon la revendication 5 dans lequel ledit tamis moléculaire zéolithique 10 MR monodimensionnel est la ZBM-30 synthétisée avec le structurant organique triéthylènetétramine.

7. Procédé selon l'une des revendications 1 à 6 dans lequel ledit catalyseur d'hydroisomérisation comprend soit au moins un métal noble du groupe VIII soit au moins un métal du groupe VIB, en combinaison avec au moins un métal non noble du groupe VIII.

8. Procédé selon l'une des revendications 1 à 7 dans lequel ledit catalyseur d'hydroisomérisation comprend le platine et le palladium.

9. Procédé selon l'une des revendications 1 à 8 dans lequel les charges sont constituées par l'ensemble des huiles végétales et des graisses animales, contenant essentiellement des triglycérides et des acides gras ou des esters, avec des chaînes grasses hydrocarbonées ayant un nombre d'atomes de carbone compris entre 6 et 25, lesdites huiles pouvant être les huiles de palme, de palmiste, de coprah, de ricin et de coton, les huiles d'arachides, de lin, de crambe, de jatropha, toutes les huiles issues du tournesol ou du colza par modification génétique ou hybridation ainsi que les huiles d'algues, les huiles de fritures ou les huiles animales.

## Patentansprüche

1. Verfahren zum Behandeln einer Charge, die aus einer erneuerbaren Quelle stammt, umfassend die folgenden Schritte:
a) Hydrobehandeln in Gegenwart eines Festbettkatalysators, wobei der Katalysator eine hydrierende/dehydrierende Funktion und einen amorphen Träger umfasst, bei einer Temperatur im Bereich zwischen 200 und 450 °C, bei einem Druck im Bereich zwischen 1 MPa und 10 MPa, bei einer Raumgeschwindigkeit pro Stunde im Bereich zwischen 0,1 h⁻¹ und 10 h⁻¹ und in Gegenwart einer Gesamtmenge an Wasserstoff, die mit der Charge derart gemischt ist, dass das Verhältnis Wasserstoff/Charge im Bereich zwischen 150 und 750 Nm³ Wasserstoff/m³ Charge liegt,
b) Abtrennen mindestens eines Teils des Wassers und mindestens eines Kohlenwasserstoffgrundstoffs von dem aus Schritt a) stammenden Abstrom,
c) Entfernen der Stickstoffverbindungen aus dem aus Schritt b) stammenden Kohlenwasserstoffgrundstoff,
d) Hydroisomerisieren mindestens eines Teils des aus Schritt c) stammenden Kohlenwasserstoffgrundstoffs in Gegenwart eines selektiven Festbett-Hydroisomerisierungskatalysators, wobei der Katalysator mindestens ein Metall der Gruppe VIII und/oder der Gruppe VIB und mindestens ein eindimensionales zeolithisches 10-MR-Molekularsieb umfasst, ausgewählt aus den zeolithischen ZSM-48- und ZBM-30-Molekularsieben, allein oder als Gemisch, wobei Schritt c) bei einer Temperatur im Bereich zwischen 150 und 500 °C, bei einem Druck im Bereich zwischen 1 MPa und 10 MPa, bei einer Raumgeschwindigkeit pro Stunde im Bereich zwischen 0,1 und 10 h⁻¹ und in Gegenwart einer Gesamtmenge an Wasserstoff durchgeführt wird, die derart mit der Charge gemischt ist, dass das Verhältnis Wasserstoff/Charge im Bereich zwischen 70 und 1.000 Nm³/m³ Charge liegt,
e) Abtrennen des Wasserstoffs, der Gase und mindestens eines Dieselgrundstoffs von dem aus Schritt c) stammenden Abstrom.

2. Verfahren nach Anspruch 1, wobei Schritt a) in Gegenwart einer Gesamtmenge an Wasserstoff arbeitet, die derart mit der Charge gemischt ist, dass das Verhältnis Wasserstoff/Charge im Bereich zwischen 150 und 650 Nm³ Wasserstoff/m³ Charge liegt.

3. Verfahren nach Anspruch 2, wobei Schritt a) in Gegenwart einer Gesamtmenge an Wasserstoff arbeitet, die derart mit der Charge gemischt ist, dass das Verhältnis Wasserstoff/Charge im Bereich zwischen 150 und 600 Nm³ Wasserstoff/m³ Charge liegt.

4. Verfahren nach einem der Ansprüche 1 bis 3, wobei Schritt c) auf einem Ionenaustauschharz durchgeführt wird.

5. Verfahren nach einem der Ansprüche 1 bis 4, wobei das eindimensionale zeolithische 10-MR-Molekularsieb ZBM-30 ist.

6. Verfahren nach Anspruch 5, wobei das eindimensionale zeolithische 10-MR-Molekularsieb ZBM-30, synthetisiert mit dem organischen Strukturmittel Triethylentetramin, ist.

7. Verfahren nach einem der Ansprüche 1 bis 6, wobei der Hydroisomerisierungskatalysator entweder mindestens ein Edelmetall der Gruppe VIII oder mindestens ein Metall der Gruppe VIB, in Kombination mit mindestens einem Nichtedelmetall der Gruppe VIII umfasst.

8. Verfahren nach einem der Ansprüche 1 bis 7, wobei der Hydroisomerisierungskatalysator Platin und Palladium umfasst.

9. Verfahren nach einem der Ansprüche 1 bis 8, wobei die Charge aus der Gesamtheit der Pflanzenöle und der tierischen Fette bestehen, die im Wesentlichen Triglyceride und Fettsäuren oder Ester mit Kohlenwasserstofffettketten enthalten, die eine Anzahl an Kohlenstoffatomen im Bereich zwischen 6 und 25 aufweisen, wobei die Öle Palm-, Palmkern-, Kopra-, Rizinus- und Baumwollöle, Erdnuss-, Lein-, Krambe-, Jatrophaöle, alle Öle aus Sonnenblumen- und Rapssamen, die durch genetische Modifikation oder Hybridisierung erhalten wurden, sowie Algenöle, Frittieröle oder tierische Öle sein können.

## Claims

1. A process for treating a feedstock from a renewable source, comprising the following stages:
a) hydrotreatment in the presence of a fixed-bed catalyst, said catalyst comprising a hydrodehydrogenizing function and an amorphous support, at a temperature ranging between 200°C and 450°C, at a pressure ranging between 1 MPa and 10 MPa, at an hourly space velocity ranging between 0.1 h⁻¹ and 10 h⁻¹ and in the presence of a total amount of hydrogen mixed with the feedstock such that the hydrogen/feedstock ratio ranges between 150 and 750 Nm³ hydrogen/m³ feedstock,
b) separtion, from the effluent from stage a), of at least part of the water and at least one hydrocarbon-containing base,
c) removal of the nitrogen compounds from said hydrocarbon-containing base from stage b),
d) hydroisomerization of a least part of said hydrocarbon-containing base from stage c) in the presence of a fixed-bed hydroisomerization selective catalyst, said catalyst comprising at least one metal of group VIII and/or at least one metal of group VIB and at least one monodimensional 10 MR zeolite molecular sieve selected from the zeolite molecular sieves ZSM-48 and ZBM-30, alone or in admixture,, wherein said stage c) is carried out at a temperature ranging between 150°C and 500°C, at a pressure ranging between 1 MPa and 10 MPa, at an hourly space velocity ranging between 0.1 h⁻¹ and 10 h⁻¹ and in the presence of a total amount of hydrogen mixed with the feedstock such that the hydrogen/feedstock ratio ranges between 70 and 1000 Nm³/m³ feedstock,
e) separation, from the effluent from stage d), of the hydrogen, the gases and at least one diesel fuel base.

2. Process as claimed in claim 1, wherein stage a) operates in the presence of a total amount of hydrogen mixed with the feedstock such that the hydrogen/feedstock ratio ranges between 150 and 650 Nm³ hydrogen/m³ feedstock.

3. Process as claimed in claim 2, wherein stage a) operates in the presence of a total amount of hydrogen mixed with the feedstock such that the hydrogen/feedstock ratio ranges between 150 and 600 Nm³ hydrogen/m³ feedstock.

4. Process as claimed in any one of claims 1 to 3, wherein stage c) is carried out with an ionexchange resin.

5. Process as claimed in any one of claims 1 to 4, wherein said monodimensional 10 MR zeolite molecular sieve is ZBM-30.

6. Process as claimed in claim 5, wherein said monodimensional 10 MR zeolite molecular sieve is ZBM-30 synthesized with triethylene tetramine organic structurant.

7. Process as claimed in any one of claims 1 to 6, wherein said hydroisomerization catalyst comprises either at least one noble metal of group VIII or at least one metal of group VIB, in combination with at least one non-noble metal of group VIII.

8. Process as claimed in any one of claims 1 to 7, wherein said hydroisomerization catalyst comprises platinum and palladium.

9. Process as claimed in any one of claims 1 to 8, wherein the feedstocks consist of all of the vegetable oils and animal fats, essentially containing triglycerides and fatty acids or esters, with hydrocarbon fatty chains having a number of carbon atoms ranging between 6 and 25, wherein said oils can be palm, palm-nut, copra, castor and cotton oils, peanut, linseed, crambe and jatropha oils, all oils resulting from sunflower or rapeseed through genetic modification or hybridization, as well as algae oils, waste kitchen oils or animal oils.
